# EUROPEAN PATENT APPLICATION

(11) **EP 1 492 282 A2**
(43) Date of publication of application: **29.12.2004**
(21) Application number: 04397015.1
(22) Date of filing: 24.06.2004
(51) Int. Cl.: H04L 12/56

(54) **A tunnel broker and a method and a system for forming a tunneling connection**

(30) Priority: 27.06.2003 FI 20030955
(71) Applicant: TeliaSonera Finland Oyj, 00510 Helsinki (FI)
(72) Inventor: Korhonen, Jouni, 11100, Riihimäki (FI); Luostarinen, Tomi, 00710, Helsinki (FI); Ala-Luukko, Sami, 00200, Helsinki (FI)
(74) Representative: Rönkkö, Taina Mirjam

(57) **Abstract**

The invention relates to a method for directing data communication from a wireless local area network to a home network by tunnelling. In the method, a temporary tunnelling is formed via the operator network in such a manner that the access point name (APN) of the home network is determined, to which access point said temporary tunnelling connection from the wireless local area network is formed. When the data communication has finished, said tunnelling connection is cancelled. The tunnelling connection can be formed automatically by means of a tunnel broker. In addition, the invention relates to a data communication system utilizing the method, as well as a tunnel broker.

## Description

The present invention relates to a method for directing data communication from a wireless local area network to a home network as set forth in the preamble of the independent claim 1, in which method the data communication is tunnelled to the home network. In addition, the invention relates to a system for implementing said method as set forth in the preamble of the independent claim 7. Further, the invention relates to a tunnel broker for forming a data transfer connection from a wireless local area network to a home network as set forth in the preamble of the independent claim 13.

In the future, network tunnelling will be utilized in wireless local area and communication network environments in order to direct the traffic of base stations of wireless local area networks from the base station to an operator of the communication network and further to the home network of a user. The home network can be located by means of an Access Point Name, the APN-name, via which the mobile terminal connects to the fixed network.

Network tunnelling in wireless local area networks means that several tunnels (e.g. GRE, Generic Routing Encapsulation) are created from the base station of a local area network between the Packet Data Gateway of the local area network and the packet data gateways of different operators. By using conventional tunnels, all the tunnels for the networks of all the operators that may roam in the base station in question are to be customized in the gateway of the base station. This becomes impossible especially because of network roaming, because keeping all these tunnels active all the time requires vast resources, especially from the gateway of the base station.

The described problem can be seen to occur in connection with future communication networks, such as, for example, the UMTS network (Universal Mobile Telecommunication System). To the knowledge of the applicant, there are no existing solutions for this. Previous tunnelling solutions have been designed for the IP environment (Internet Protocol), in which case they cannot be directly connected, for example, to a link network formed by a wireless local area network and a wireless communication network (e.g. WLAN-UMTS).

The present invention provides one solution to the described problem. The purpose of the invention is to enable an automatic, temporary network tunnelling provided by means of access point names from the base station of a wireless local area network via a packet gateway to a packet gateway of an operator network. To put it more precisely, the present method for directing data transfer is primarily characterized in that a temporary tunnelling connection is formed via an operator network in such a manner that the access point name (APN) of the home network is determined, to which access point said temporary tunnelling connection from the wireless local area network is formed, in which case when the data communication has ended, said tunnelling connection is cancelled. The system according to the invention is primarily characterized in that the system comprises means for determining the access point name (APN) of the home network, in which case said tunnelling connection is a temporary tunnelling connection to said access point.

The temporary creation of tunnels is implemented by using a tunnel broker, which may be located, for example, on the edge of the network connecting the communication networks (such as GPRS, UMTS), or merged as a part of the packet gateway of the operator network. The tunnel broker is primarily characterized in that said data transfer connection is a temporary tunnelling connection, in which case the tunnel broker comprises means for forming said temporary tunnelling connection from the wireless local area network to the access point of said home network, which tunnel broker is in addition arranged to cancel said tunnelling connection after the data communication has ended. The identification procedures required for creating tunnels can be performed by utilizing an already existing AAA-infrastructure, which consists of user authentication, authorization and accounting. The packet gateways of the visit network would thus function as the customer end of the tunnels. Correspondingly, as the server end of the tunnel would function either the packet gateway of the operator network, or said tunnel broker in a connecting network, which broker implements the automated network tunnelling between the local area network and the operator network.

If the connecting network (such as, for example, GRX) offers tunnel broker service, the gateway of the base station and the gateway of the visit network do not need to know anything besides the address or name to which the tunnels are directed. The method according to the invention facilitates significantly the maintenance load of operators in connection with tunnelling, because the tunnel broker takes care of finding the tunnel ends, as well other possible issues connected to communication, such as contracts. The operator needs to make a contract on tunnelling only with this tunnel broker instead of all the possible networks and operators.

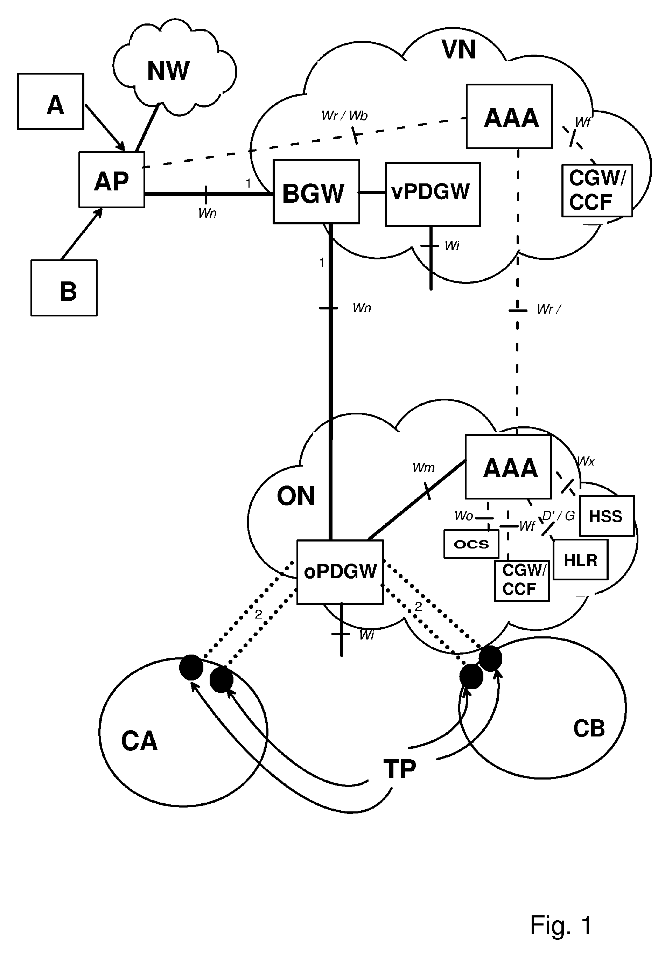

The invention is described more in detail with reference to the following drawing, where
- Fig. 1: shows one advantageous example of the data communication system according to the invention.

In Fig. 1, two users A, B want a connection to their own home networks, such as, for example, their company networks CA and CB. In order to implement this, they make a connection with the base station AP of the wireless local area network, via which the data transfer connection to the company network CA, CB can be formed. The wireless local area network is advantageously a WLAN network, but the wireless local area network can also be some other corresponding network, via which it is possible to form a connection to a fixed general network, such as the Internet, or an Intranet. The base station AP directs the communication to the visit network VN, for example via the interface BGW of the packet networks. Alternatively, the communication can be directed directly to the packet gateway vPDGW of the visit network VN.

The visit network VN and the operator network OP are advantageously communication networks according to the 3GPP standard, for example UMTS networks, in which case in transferring the data of a wireless local area network towards a network of said standard, the reference point Wn is used. The visit network VN, as well as the operator network OP, comprise packet gateways vPDGW, oPDGW (Packet Data GateWay), as well as cache servers AAA, whose task is to take care of the procedures connected to user identification in a manner known as such. The reference point Wr connects the wireless local area network to the AAA-server of the visit network VN in order to implement the identification procedures in question. Accounting data is transferred over the reference point Wf between the AAA server and the element CGW/CCF charging for the use of the networks (Charging GateWay/Charging Collection Function).

In order to implement tunnelling, the required transmission data can be changed from the operator network OP to the visit network VN by some known method, but according to an advantageous embodiment of the invention, the packet gateway vPDGW and the AAA-server determine the APN-names of the company networks CA, CB and make the required routing examinations, according to which the communication of different users A, B is routed to the operator network OP and the packet gateway oPDGW of the operator network. In this example, the company networks CA, CB of the users A, B have different APN-names, but they point towards the packet gateway oPDGW of the same operator network.

Several tunnels (1) are formed between the base station AP of the wireless local area network and the packet gateway oPDGW of the operator network via the packet gateway vPDGW of the roaming network when a data communication connection is required. The temporary creation of tunnels can be implemented automatically by utilizing a tunnel broker. The tunnel broker (not shown) may be located, for example, on the edge of the visit network VN, such as a network (e.g. GRX, GPRS Roaming exchange) connecting communication networks (such as GPRS, UMTS) Thus, the base station AP and the packet gateway vPDGW of the visit network VN only need to know the address or name of the tunnel broker to which the tunnels are directed. The tunnel broker may also, as in this embodiment, be merged as a part of the packet gateway oPDGW of the operator network OP.

The identification procedures required for creating tunnels may be performed by utilizing the already existing AAA-infrastructure. When the customer has been identified, at least its address is therefore known.

Similarly to the visit network, the operator network OP comprises an AAA-server, which is connected (Wo / Wf) to the accounting systems, such as the accounting systems OCS (Online Charging System) as well as the CGW/CCF of the operator network. In addition, the AAA-server is in communication connection (Wx) with the customer server HSS (Home Subscriber Server) as well as (D' / Gr') the Home Location Register HLR. The packet gateway oPGGW of the operator network OP or a tunnel broker merged to it performs the routing examination on the basis of the APN name, as well as decides what company networks the communication coming from the base station AP of the wireless local area network is directed to.

In this connection the communication going to the company networks CA, CB is encapsulated again inside the GRE-protocol and directed to tunnels (2) ending in the company networks. A company-specific tunnel runs between the tunnel broker located in the packet gateway oPDGW of the operator network OP and the base station of each company network CA, CB. In the example, the communication of user A goes to the terminating point TP of the GRE-tunnel in the company network CA, and correspondingly, the communication of the user B goes to the terminating point TP of the GRE-tunnel (2) in the company network CB. According to the invention, the tunnel broker may cancel the tunnels automatically when the last user of the tunnel finishes communication via the base station AP.

The invention can be applied from the above-described embodiment without deviating from the idea of the invention to use intelligent gateways as well as AAA-servers supporting tunnelling. The network tunnelling formed temporarily in the invention is advantageously according to the GRE-protocol, but it is obvious that other protocols may also be used. By means of the tunnelling according to the invention, virtual operator function and different company-specific solutions are also possible, in which, for example, the data of a customer is always transferred via the company intranet. By understanding that the above-described embodiment of the invention is one example of the present invention, it is obvious that it should not be interpreted as limiting the invention. The other embodiments of the invention may freely vary within the scope of the inventive features described in the following claims.

## Claims

1. A method for directing data communication from a wireless local area network (NW) to a home network (CA, CB), in which method the data communication is tunnelled to the home network (CA, CB), **characterized in that** a temporary tunnelling is formed via an operator network (ON) in such a manner that the name of the access point (TP) of the home network is determined, to which access point (TP) said temporary tunnelling connection from the wireless local area network (NW) is formed, in which case when the data communication ends, said tunnelling connection is cancelled.

2. The method according to claim 1, **characterized in that** the tunnelling connection is formed automatically by means of a tunnel broker.

3. The method according to claim 1 or 2, **characterized in that** a temporary tunnelling connection is formed when determining the routing of the data communication.

4. The method according to any of the claims 1 to 3, **characterized in that** a temporary tunnelling connection is formed in connection with user identification.

5. The method according to any of the preceding claims, **characterized in that** a tunnelling connection is formed with GRE-tunnels.

6. The method according to any of the preceding claims, **characterized in that** a tunnelling connection is formed from a WLAN network to an UMTS network.

7. A data communication system, which comprises a tunnelling connection between a wireless local area network (NW) and a home network (CA, CB) for transmitting data communication, **characterized in that** the system comprises means (AAA) for determining the access point name (TP) of the home network (CA, CB), in which case said tunnelling connection is a temporary tunnelling connection to said access point (TP).

8. The system according to claim 7, **characterized in that** the system comprises a tunnel broker for forming said tunnelling connection automatically from the wireless local area network (NW) to said access point (TP), which tunnel broker is in addition arranged to cancel said tunnelling connection when the data communication has ended.

9. The system according to claim 7 or 8, **characterized in that** the tunnel broker is arranged in connection with the network connecting the communication networks.

10. The system according to claim 7 or 8, **characterized in that** the tunnel broker is arranged to the packet gateway (oPDGW) of the operator network.

11. The system according to any of the claims 7 to 10, **characterized in that** the tunnels are GRE-tunnels.

12. The system according to any of the claims 7 to 11, **characterized in that** the tunnelling connection is arranged between a WLAN network and a UMTS network.

13. A tunnel broker for forming a data transfer connection from a wireless local area network (NW) to a home network (CA, CB), **characterized in that** said data transfer connection is a temporary tunnelling connection, in which case the tunnel broker comprises means for forming said temporary tunnelling connection from the wireless local area network (NW) via the operator network (ON) to said access point (TP) of the home network (CA, CB), which tunnel broker is in addition arranged to cancel said tunnelling connection after the data communication has ended.

14. The tunnel broker according to claim 13, **characterized in that** the tunnel broker is arranged in connection with a network connecting communication networks.

15. The tunnel broker according to claim 13, **characterized in that** the tunnel broker is arranged in the packet gateway (oPDGW) of the operator network.
